# EUROPÄISCHE PATENTSCHRIFT

(11) **EP 4 489 621 B1**
(45) Veröffentlichungstag und Bekanntmachung des Hinweises auf die Patenterteilung: **08.04.2026**
(21) Anmeldenummer: 23704948.1
(22) Anmeldetag: 10.02.2023
(51) Int. Cl.: A47G 21/18, A47G 19/22

(54) **TRINKSYSTEM**
DRINKING SYSTEM
SYSTÈME DE BOISSON

(30) Priorität: 11.03.2022 DE 102022105794
(43) Veröffentlichungstag der Anmeldung: 15.01.2025
(60) Teilanmeldung: 26157159.0
(73) Patentinhaber: August Töpfer & Co. (GmbH & Co.) KG, 20539 Hamburg (DE)
(72) Erfinder: ERNST, Rudolf, 22609 Hamburg (DE)
(74) Vertreter: Hoffmann Eitle
(86) Internationale Anmeldenummer: PCT/EP2023/053361
(87) Internationale Veröffentlichungsnummer: WO 2023/169769

(56) Entgegenhaltungen:
- GB-A- 2 401 527
- US-A1- 2008 128 427
- US-A1- 2012 261 375
- US-A1- 2014 166 680
- US-B2- 9 795 242

## Beschreibung

Die vorliegende Erfindung betrifft ein Trinksystem.

Es sind im Stand der Technik Trinksysteme beschrieben, die den Genuss von mit in Luft eingebrachten Duftstoffen versetztem Wasser ermöglichen, das dann infolge einer sensorischen Wahrnehmung des sogenannten retronasalen Riechens, bei dem die in der Luft transportieren über den Mund und den Rachenraum aufgenommenen Duftstoffe zwar geruchssensorisch wahrgenommen, aber vom Gehirn als Geschmack interpretiert werden, einen von dem Geschmack reinen Wassers verschiedenen Geschmack aufzuweisen scheint. Je nach Auswahl des Duftstoffes scheint so das Trinkwasser z.B. nach Orange, Pfefferminz oder dergleichen zu schmecken, obwohl die als Getränk zu sich genommene Substanz weiterhin bloßes Trinkwasser ist.

Ein solches Trinksystem ist z.B. in der WO 2019/016096 A1 offenbart. Ein von den in dieser Offenlegungsschrift bezeichneten Erfindern basierend auf den dort offenbarten Prinzipien entwickeltes Trinksystem ist am Markt unter dem Markennamen Air Up^{®} erhältlich.

Bestandteil dieses Trinksystems ist ein Trinkbehälter, dort in Form einer Trinkflasche, in den, ausgehend von einer Trinköffnung an einem oberen Ende ein Trinkhalm bis an oder nahe an einen an einem unteren Ende des Gefäßes gelegenen Grund ragt. In einem Abschnitt, der nahe an der Trinköffnung gelegen ist, ist in einer Außenwand des Trinkhalms eine Öffnung von gegenüber einem Querschnitt des Trinkhalms geringerem Durchmesser vorgesehen. Weiterer Bestandteil des Trinksystems ist ein auf den Trinkbehälter aufsetzbares, bzw. an diesem festlegbares Duftreservoir, welches eine Einström- und eine Ausströmöffnung aufweist. Das Duftreservoir ist mit einem Duftstoff beladen, der an das Duftreservoir von der Einströmöffnung bis zur Ausströmöffnung durchströmende Luft abgegeben wird. Ist das Duftreservoir an dem Trinkgefäß angeordnet, ist die Ausströmöffnung strömungstechnisch mit der Öffnung in der Außenwand des Trinkhalms verbunden. Wenn nun ein Benutzer des Trinksystems an dem Trinkhalm saugt, dadurch einen Strom von in dem Trinkgefäß enthaltenem Getränk, nämlich Wasser, auslöst, so entsteht an der Öffnung in der Außenwand des Trinkhalms ein Unterdruck durch den über das Duftreservoir Luft angesaugt wird, die beim Durchströmen des Duftreservoirs mit dem Duftstoff beladen wird und dann zusammen mit dem angesaugten Wasser in den Mund- und Rachenbereich des Benutzers gelangt, dort den vorstehen genannten Effekt der Sinneswahrnehmung durch retronasales Riechen hervorruft und somit den angestrebten, durch die Art des Duftstoffes bestimmten Geschmackseindruck.

Das aus dem Stand der Technik bekannte System funktioniert dadurch, dass der Anwender in dem Trinkhalm Unterdruck generiert und zusammen mit der zu trinkenden Flüssigkeit über die Einströmöffnung Luft ansaugt, welche in dem Duftreservoir mit einem Duftstoff versetzt, also parfümiert, wird. Dies geschieht nach dem Stand der Technik dadurch, dass die Luft in dem Duftreservoir über ein parfümiertes Speichermedium geführt wird. Die angesaugte Luft nimmt im Vorbeistreichen Duftstoff aus dem Speichermedium auf. Das Duftreservoir wird in der Anmeldung DE 20 2016 004 961 U1 2016.10.20 als "Aromaeinheit" bezeichnet und am Markt derzeit als "Duftpod" zum Gebrauch in dem vorstehend erwähnten Trinksystem verkauft, das unter der Marke Air Up^{®} angeboten wird.

Dieses bekannte System weist folgende Nachteile auf:
- Die Duftabgabe derartiger Duftpods ist nicht konstant über die Anwendungsmenge, in der Praxis wird eine Verwendungsmenge von fünf Litern Getränk genannt, sondern nimmt über die Gebrauchsdauer des Dufpods kontinuierlich ab. Das liegt daran, dass mit fortschreitender Dauer des Gebrauchs die Konzentration der Duftstoffe im Speichermedium abnimmt. Das bedeutet, dass der Diffusionsdruck der Duftstoffe über die Dauer des Gebrauchs abnimmt, so dass die vorbeistreichende Luft immer weniger parfümiert wird. Das durch retronasales Riechen ausgelöste Geschmackserlebnis, beziehungsweise die Intensität des Geschmackes, nimmt ab und zwar mit regressivem Verlauf, der zur Null-Linie hin asymptotisch ausläuft. Das stellt den Verbraucher vor die Frage, wann genau der Duftpod erschöpft ist und ausgewechselt werden muss. Diese Frage ist aber nicht leicht und nicht eindeutig zu beantworten, weil die Verringerung des Dufterlebnisses pro getrunkenem Volumenteil immer geringer wird. Es wäre besser, wenn das Dufterlebnis nicht allmählich, sondern abrupt enden würde, damit der Verbraucher klar erkennen kann, wann der erschöpfte Duftpod ausgewechselt werden muss. Der Verbraucher steht vor dem Dilemma, entweder den Duftpod zu früh auszuwechseln und damit potentiell auf Nutzen zu verzichten, den er bezahlt hat, oder eben zu lange zu warten und ungewollt ein eingeschränktes Geschmackserlebnis in Kauf zu nehmen. Aufgrund des regressiven Charakters der Erschöpfung des Duftpods ist die Veränderung des Dufterlebnisses gegen Ende der vorgesehenen Gebrauchsmenge nur jeweils gering pro Volumeneinheit getrunkener Flüssigkeit, so dass die Erschöpfung des Duftpods schwer abzuschätzen ist. Einige Verbraucher begegnen dem dadurch, dass eine Strichliste über den mit einem Duftpod unternommenen Konsum von Flüssigkeit geführt wird, um den Erschöpfungszeitpunkt eines Duftpods über ein Quantum konsumierter Flüssigkeit genauer bestimmen zu können. Das ist natürlich eine umständliche Lösung.
- Die Menge an Luft, die in den Trinkhalm eingesaugt werden kann, ohne das Trinkerlebnis über Gebühr zu durch Blasenbildung - diese führt zu einem von den Anwendern als "blubberig" beschriebenen Trinkgefühl - zu beeinflussen, ist begrenzt auf maximal 20 bis 30 % des Volumenstromes. Deswegen ist natürlich auch die Menge an Duftstoff begrenzt, die mit einem derartigen System in den Mund des Trinkenden gefördert werden kann. Diese Begrenzung ergibt sich durch die Menge an Duftstoff, die der gegebene Luftstrom aufnehmen kann. Dieser Umstand begrenzt das Geschmackserlebnis, das generiert werden kann. In dem bekannten Trinksystem der Marke Air Up^{®} werden, bei vollständiger Aufnahme der im Duftpod gespeicherten Duftstoffe, maximal 0,3 Gramm Duftstoff auf 5 Liter Wasser eingesetzt. Das entspricht im Mittel einem Anteil 0,006 % bezogen auf den Massenstrom an zu trinkender Flüssigkeit. Es liegt damit ein Mischungsverhältnis zwischen Trinkflüssigkeit und Duftstoff von über 1 zu 15.000 vor, was ein sehr extremer Wert ist. Bei dieser extremen Verdünnung des Duftstoffes in dem zu trinkenden Flüssigkeits-Luftgemisch kann das Geschmackserlebnis ausschließlich durch retronasales Riechen bzw. Schmecken erzielt werden. Konventionelles Geschmackserlebnis, das auf der Zunge generiert wird, kann dieses System aufgrund einer zu geringen Konzentration der Aromastoffe gar nicht bieten. Damit ist auch ausgeschlossen, dass Süße geschmeckt werden kann, weil die Rezeptoren für Süße ausschließlich auf der Zunge sitzen, diese Geschmacksrichtung über retronasales Riechen nicht wahrgenommen werden kann. Das ist deswegen von Nachteil, weil ein gewisses Maß an Süße für viele Menschen Teil eines ausgewogenen Geschmackserlebnisses ist.
- Der Verbrauch an Kunststoff ist, bezogen auf einen Liter getrunkene Flüssigkeit, unnötig hoch. Ein Duftpod soll ausreichend sein für fünf Liter Getränk und wiegt rund 7,5 Gramm. Davon entfallen rund 3 Gramm auf das Speichermedium für den Duftstoff, 0,3 Gramm für die Parfümierung und der Rest von 3,2 Gramm ist Kunststoff-Verpackung. Das bedeutet, dass nur 4 % Gewichtsanteil des Duftpods auf den Anteil an Duftstoff entfallen 96 % sind Verpackung.
- Außerdem muss jeder Duftpod einzeln sehr aufwändig in aromadichte Barriere-Folien verpackt werden, damit in dem Zeitraum zwischen Herstellung und Anwendung kein Duftstoff verloren geht. Das Verhältnis von wirksamem Duftstoff zu Verpackung ist sehr ungünstig, nämlich fast 1:1. Das heißt, dass ein Duftpod à 7,5 Gramm in Kunststoff-Verpackungen mit einem Gesamtgewicht von 6,4 Gramm eingeschweißt sind. Insgesamt kommen damit 13,6 Gramm Verpackungsmaterial (einschließlich dem Speichermedium) auf 0,3 Gramm Duftstoff, dies ist ein Verhältnis von 45:1.
- In der Lösung des Trinksystems Air Up^{®} ist zwar eine Art Abschaltmechanismus vorgesehen. Dort verschiebt der Schraubdeckel den Duftpod relativ zu einem Gummi-Element. Dadurch werden die Öffnungen für Zu- und Abluft abgedeckt und provisorisch verschlossen. Angesichts des hohen Diffusionsdruckes, der konzentrierten Duftstoffen im Verhältnis zur Umgebungsluft zu eigen ist, wird durch diese Maßnahme, die Alterung des Produktes bei Nicht-Gebrauch zwar deutlich gedrosselt aber nicht vollständig verhindert.

Außerdem sind aus dem Stand der Technik Systeme, so aus der US 2010/00121 93 A1 oder der US 2015/0307265 A1, bekannt, welche einfaches Trinkwasser dadurch mit Geschmack versehen, dass dieses während des Trinkvorganges an einem Festkörper vorbeigeleitet wird. Dieser Festkörper besteht aus verpressten wasserlöslichen Aromen und Geschmacksstoffen, welche sich in der zu trinkenden Flüssigkeit auflösen. Diese Systeme können auch ein herkömmliches Geschmackserlebnis vermitteln. Der vorteilhafte Effekt des retronasalen Riechens und Schmeckens wird aber in diesen Systemen nicht oder nur nebensächlich ausgenutzt.

Ein Trinksystem nach der Präambel des Anspruchs 1 ist aus der US 2012/261375 A1 bekannt. Weitere Trinksysteme sind außerdem aus der US 2008/128427 A1, der D3 GB 2 401 527 A, der D4 US 2014/166680 A1 und der D5 US 9 795 242 B2 bekannt.

Die vorliegende Erfindung hat sich zur Aufgabe gestellt, ein Trinksystem zu entwickeln, das sowohl das Prinzip des retronasalen Riechens als auch das Prinzip des herkömmlichen Schmeckens nutzt, indem es auch die Geschmacksrezeptoren auf der Zunge anspricht. Außerdem sollen die Nachteile der bekannten Produkte überwunden werden.

Das erfindungsgemäße Trinksystem ist in Anspruchs 1 beschrieben. Die abhängigen Ansprüche beschreiben entsprechende vorteilhafte Ausführungsformen hiervon.

Ein erfindungsgemäßes Trinksystem weist folgende Bestandteile auf:
- ein einen Aufnahmeraum für eine Flüssigkeit bestimmendes Trinkgefäß,
- einen an dem Trinkgefäß angeordneten, in den Aufnahmeraum hineingeführten, mit einem eine Einlassöffnung aufweisenden ersten Ende in Richtung eines Grundes des Aufnahmeraums ragenden und mit einem eine Trinköffnung aufweisenden zweiten Ende und mit einem zwischen der Einlassöffnung und der Trinköffnung einen Saugkanal aufweisenden, von dem Trinkgefäß vorstehenden Trinkhalm,
- ein über einen Zuströmkanal mit dem Trinkhalm verbundenes Aromareservoir.

Insoweit stimmt das erfindungsgemäße Trinksystem noch mit einem aus dem Stand der Technik bekannten Trinksystem überein. Es unterscheidet sich nun aber von diesem dadurch und zeichnet sich dadurch aus, dass in dem Aromareservoir ein flüssiges, Duft- und/oder Geschmacksstoffe in gelöster oder emulgierter und dabei verdünnter Form enthaltendes Aromamedium enthalten ist, welches bei einem Ansaugen von Flüssigkeit aus dem Trinkgefäß durch den Trinkhalm durch den Zuströmkanal in den Trinkhalm angesaugt und dort mit der in den Trinkhalm eingesaugten Flüssigkeit aus dem Trinkgefäß durchmischt wird.

Die Erfindung beruht auf der Idee, mit Hilfe des Unterdrucks im Trinkhalm nicht etwa mit Duftstoff beladene Luft, sondern stattdessen ein flüssiges Aromamedium in die zu trinkende Flüssigkeit zu saugen. In diesem flüssigen Aromamedium sind Duft- und/oder Geschmacksstoffe entweder gelöst oder emulgiert. Die Duftstoffe- oder Geschmacksstoffe können beispielsweise aus ätherischen Pflanzenölen, wie zum Beispiel Limetten-Öl bestehen.

Ferner sieht die Erfindung vor, dass diese Duft- und/oder Geschmacksstoffe in verdünnter Form eingesetzt werden. Der Einsatz in verdünnter Form erfolgt zum einen daher, weil konzentrierte Duftstoffe in ihrer unverdünnten Reinform in vielen Fällen für den menschlichen Verzehr nicht geeignet sind, da sie Reizungen an Schleimhäuten verursachen können. Andererseits wird die verdünnte Form auch deshalb gewählt, weil durch die Verdünnung bewirkt wird, dass eine größere Menge des flüssigen Aromamediums gefördert werden muss, sich so ein größerer Volumenstrom ergibt. Ein größerer Volumenstrom fließt konstanter und ist somit weniger empfindlich gegenüber Einflüssen von z.B. aufgrund von Fertigungs-Toleranzen der Bauteile, wie zum Beispiel Durchmesser von Bohrungen und Rauigkeit auf einer Innenseite eines Zuführkanals, ist. Temperaturbedingte Schwankungen der Viskosität des zu fördernden flüssigen Aromamediums wirken sich in verdünnter Form ebenfalls weniger aus.

Handelt es sich bei den Duft- und/oder Geschmacksstoffen um wasserlösliche Stoffe, so kann die Verdünnung mit Wasser geschehen, kann das flüssige Aromamedium also eine Lösung der Duft- und/oder Geschmacksstoffe in Wasser sein. Handelt es sich bei den Duft- und/oder Geschmacksstoffen indes um wasserunlösliche Stoffe, wie zum Beispiel ätherische Öle, dann sieht die Erfindung den Einsatz eines Emulgators als Vermittler für die Lösung der betreffenden Stoffe in Wasser vor. In diesem Fall ist dann das flüssige Aromamedium eine Emulsion in Wasser. Als Emulgatoren für ätherische Öle bieten sich z.B. Polysorbat oder Lecithin an.

Die erfindungsgemäße Verdünnung der in dem Aromareservoir eingefüllten Duft- oder Geschmacksstoffe ist als eine Vormischung zu betrachten, so dass der Prozess der Vermischung diese Stoffe mit dem zu trinkenden Wasser als ein in zwei Schritten ablaufender betrachtet werden kann. Der zweitstufige Mischprozess ist sehr viel leistungsfähiger als ein einstufiger Mischprozess und ermöglicht eine besonders homogene Vermischung auch bei hohen Mischungsverhältnissen.

Es kann für die Verdünnung von Duft- oder Geschmacksstoffen in dem flüssigen Aromamedium z.B. ein Verhältnis von 1:15 bis 1:1.000 gewählt werden.

Durch eine entsprechende konstruktive Auslegung des Trinksystems, insbesondere von Leitungsdurchmessern und Öffnungsradien von Trinkhalm, Zuströmkanal und anderen beteiligten Strömungselementen kann in dem Trinkhalm eine weitere Verdünnung des aus dem Aromareservoir angesaugten flüssigen Aromamediums mit der zu trinkenden Flüssigkeit in einem Verhältnis von z.B. 1:10 bis 1:1.000 erreicht werden. Durch die Kombination beider Mischprozesse kann das Mischungsverhältnis von Duft- oder Geschmacksstoff in der zu trinkenden Flüssigkeit variieren von 1:150 bis 1:1.000.000.

Der Extremwert von einer Verdünnung der Aromastoffe in der zu trinkenden Flüssigkeit im Verhältnis 1:1.000.000 wird ohne praktische Bedeutung sein, weil eine solch geringe Konzentration für die Erzielung eines befriedigenden Geschmacks-, bzw. retronasalen Geruchserlebnisses zu gering sein wird.

Diese wird hier lediglich betrachtet, um die Variabilität und Leistungsfähigkeit des zweistufigen Mischprozesses zu verdeutlichen.

Bei einem Verdünnungsfaktor von 1:1.000.000 läge die Verdünnung bei dieser Variante um den Faktor 62 über dem Verdünnungsfaktor des AirUp-Produktes, der bei rund 1:16.000 liegt.

Das zweistufige Mischverfahren ermöglich es insbesondere, in dem Aromamedium auch Süßstoffe aufzulösen und dies dann beim Trinkprozess homogen in der zu trinkenden Flüssigkeit zu verteilen.

Moderne Süßstoffe wie Stevia oder Aspartam verfügen, im Vergleich zu Zucker, über eine sehr hohe Süßkraft, nämlich rund 400 bis 500-mal so intensiv wie Zucker. Die Süßkraft von Acesulfam ist etwas geringer, aber immer noch 200-mal so intensiv wie Zucker. Die hohe Süßkraft moderner Süßstoffe erfordert eine erhebliche Verdünnung und gleichmäßige Verteilung in der zu trinkenden Flüssigkeit, nämlich
- 1:4.000 bis 1:50.000 für Stevia und Aspartam, bzw.
- 1:2.000 bis 1:10.000 für Acesulfam.

Die genannten Süßstoffe können miteinander kombiniert werden, um synergetische Effekte auszunutzen.

In jedem Fall liegt die Bandbreite der zweckmäßigen Mischungsverhältnisse innerhalb der Bandbreite, die erfindungsgemäß technisch möglich ist. Die Erfindung sieht außerdem vor, dass das anzusaugende flüssige Aromamedium in einem Behälter gespeichert wird, der im Verhältnis zu seiner Fläche eine geringe Höhe hat. Beispielsweise eine Höhe von 15 mm bezogen auf eine Grundfläche von 900 bis 1.000 Quadratmillimetern, was einem Verhältnis von circa 1:60 entspricht.

Außerdem sieht die Erfindung vor, dass die Höhe dieses Behälters mit Vorteil sehr klein sein kann im Verhältnis zur Länge des Trinkhalmes, nämlich rund 15 bis 20 mm. Das entspricht etwa 10 % der Länge eines Trinkhalmes, der in einem erfindungsgemäßen Trinksystem typischerweise eingesetzt werden wird.

Diese Gestaltung hat zur Folge, dass Veränderungen des statischen Druckes in dem Behälter, in dem das anzusaugende flüssige Aromamedium vorgehalten wird, durch Verbrauch sehr klein sind, so dass die Menge des Aromamediums, welche in die zu trinkende Flüssigkeit eingesaugt wird, kaum oder gar nicht schwankt.

Nach einer Weiterbildung der Erfindung kann vorgesehen sein, dass der Behälter, in dem das anzusaugende flüssige Aromamedium vorgehalten wird, mit einer Zuluft-Öffnung versehen ist. Diese Öffnung kann erfindungsgemäß mit Vorteil einen relativ kleinen Durchmesser haben, vorzugsweise 1 mm oder weniger, um als Drossel zu wirken und die Menge an flüssigem Aromamedium zu begrenzen, die in den Trinkhalm gesaugt wird.

Der Behälter kann dabei insbesondere so angeordnet sein, dass diese Zuluft-Öffnung durch einen Deckel verschlossen werden kann, z.B. durch einen Schraubdeckel, der außerdem die Trinkflasche beziehungsweise den Trinkhalm bei Nichtgebrauch verschließt.

Der Behälter mit dem flüssigen Aromamedium kann insbesondere mit einem lösbaren Deckel versehen sein, der ein Nachfüllen und auch ein Reinigen des Behälters erlaubt, so dass dieser mehrfach verwendet werden kann. Der Deckel kann durch ein Außen-Gewinde am äußeren Umfang, das in ein Innengewinde an der Innenwand des Behälters eingreift, an dem Behälter gesichert werden. Dabei kann der innere Rand des Schraubdeckels insbesondere durch eine Dichtfläche abgedichtet werden. Diese Dichtfläche kann mit einem O-Ring aus einem flexiblen Material versehen werden, um die Abdichtung zu verbessern.

Der Behälter, der das ansaugende flüssige Aromamedium enthält, kann vorteilhaft mit ringförmiger Grundfläche gestaltet sein, und konzentrisch um den Trinkhalm angeordnet sein oder werden. In diesem Fall kann ein abnehmbarer Deckel des Behälters, der das Reinigen und Nachfüllen ermöglich, ringförmig ausgeführt werden. Es sind aber auch andere Behältergeometrien denkbar.

Bei einer ringförmig zylindrischen Gestaltung des Behälters für das anzusaugende flüssige Aromamedium ergeben sich die folgenden Abmessungen des Behälters: Innendurchmesser 20 mm (Öffnung), Außendurchmesser 40 mm, Höhe 15 mm, ein Füllvolumen von rund 14 ml.

Bei einem Mischungsverhältnis von 1:1.500 zwischen dem anzusaugenden flüssigen Aromamedium und der zu trinkenden Flüssigkeit, was dem 10-Fachen der bei dem aus dem Stand der Technik bekannten Trinksystem der Marke Air Up^{®} erhaltenen Aromatisierung entspricht, reichen diese 14 ml für rund 20 Liter Flüssigkeit. Man erkennt daran, wie leistungsfähig der Ansatz nach der hiesigen Erfindung im Vergleich zum Stand der Technik ist. Es kann mit der Erfindung bei 10-fach besserem Geschmackserlebnis trotzdem noch die 4-Fache Ergiebigkeit geboten werden.

Das flüssige Aromamedium kann zum Nachfüllen in den Behälter entweder in einer Flasche aus Glas oder Kunststoff oder in Beuteln mit Schraubverschluss angeboten werden, was zu einem erheblich verringerten Einsatz an Kunststoff bezogen auf den Liter zu trinkender Flüssigkeit führt.

Außerdem sieht die Erfindung in einer möglichen Weiterbildung vor, das Aromareservoir so angeordnet und gestaltet ist, dass das dort vorgehaltene flüssige Aromamedium bei Nichtgebrauch nicht durch Einwirkung der Schwerkraft in den Trinkhalm gelangen kann. Dies kann zweckmäßigerweise dadurch geschehen, dass die Verbindung zum Trinkhalm in Form eines Rohres, welches in das flüssige Aromamedium eintaucht, nach oben führt, so dass der Unterdruck im Trinkhalm die Wirkung der Schwerkraft auf die Flüssigkeitssäule des flüssigen Aromamediums überwinden muss.

Der Durchmesser der Leitung, der von dem Aromareservoir in den Trinkhalm führt, wird vorzugsweise ebenfalls relativ klein gewählt. Versuche haben ergeben, dass Durchmesser von 1 mm hier ausreichend sind.

Der geringe Durchmesser dieser Zuleitung bewirkt in Verbindung mit dem Verschluss der Zuluft-Öffnung, dass sich der Behälter nicht in den Trinkhalm entleert, wenn die Flasche verschlossen ist. Da die Förderwirkung des Unterdruckes im Trinkhalm sehr gut ist, kann, wenn nötig die Oberfläche der Zuleitung rau ausgeführt werden, um die Auslaufsicherheit im Falle des Nichtgebrauches zu erhöhen. Hier kann die Oberfläche der Zuleitung einen Mittenrauwert Ra nach DIN EN ISO 4287:2010 von 0,8 bis 3,2 µm aufweisen.

Im Gegensatz zu der Funktionsweise der bekannten Produkte erkennt der Verbraucher eindeutig, dass der Behälter mit dem flüssigen Aromamedium nachgefüllt werden muss oder erschöpft ist, wenn der Pegel derartig stark gesunken ist, dass erstens eine erhebliche Menge an zusätzlicher Luft in den Trinkhalm eingesaugt wird und zweitens das Geschmackserlebnis schlagartig ausbleibt. Wenn der Behälter transparent gebildet und von außen in dem Trinksystem einsehbar ist, so kann der Verbraucher einen Füllstand sogar optisch abschätzen.

Das Mischungsverhältnis, das sich bei Gebrauch ergibt zwischen dem anzusaugenden Aromamedium und der zu trinkenden Flüssigkeit, kann vorteilhaft beeinflusst werden durch die Gestaltung des Trinkhalmes. Soll die Menge des anzusaugenden Aromamediums größer werden, kann im Trinkhalm eine Verengung vorgesehen werden, welche dynamischen Unterdruck erzeugt. Diese Verengung kann vorteilhafterweise als Injektorpumpe ausgeführt werden. Diese Lösung ist besonders geeignet, wenn ein hochviskoses Aromamedium angesaugt werden soll. Ist die Menge des flüssigen Aromamediums, die in den Trinkhalm eingesaugt wird, größer als erwünscht, weil der statische Unterdruck, der im Trinkhalm wirkt, zu stark ist, so kann der Trinkhalm an der Einströmstelle erweitert werden, um dynamischen Überdruck in der Trinkflüssigkeit zu erzeugen, welche dem statischen Unterdruck entgegen wirkt. Diese Variante hat sich in ersten Versuchen als eine für die praktische Umsetzung bedeutsame herausgestellt.

Das Trinken einer Flüssigkeit, die mit Geschmacks- oder Aromastoffen versetzt ist, generiert ein retronasales Geschmackserlebnis dadurch, dass im Mund- und Rachenraum Aromen teilweise aus der Flüssigkeit verdampfen und über den Rachen in die Nase aufsteigen und die dort angeordneten Geschmacksrezeptoren erreichen. Das Verdampfen dieser Aromastoffe im Rachenraum wird begünstigt durch Turbulenzen, welche beim Trinken in der Flüssigkeit entstehen, sowie auch durch Erwärmung der zu trinkenden Flüssigkeit im Mund-Rachenraum.

Erfindungsgemäß kann in einer Weiterbildung das retronasale Geschmackserlebnis dadurch intensiviert werden, dass in die zu trinkende Flüssigkeit Luft angesaugt wird. Im Gegensatz zum Stand der Technik ist diese Luft jedoch nicht parfümiert und wird auch nicht dazu verwendet Duftstoffe bzw. Aromen in das resultierende Gemisch aus zu trinkender Flüssigkeit und der angesaugten Luft einzubringen. Der Verzicht auf diese Funktion ermöglicht es, den anzusaugenden Luftstrom stark zu begrenzen, nämlich auf einen Bruchteil dessen, was an Luft nach dem Stand der Technik angesaugt wird. Vorteilhaft ist ein Volumenstrom zwischen 5 und 10 % des Volumenstroms der zu trinkenden Flüssigkeit. Damit wird der bei dem aus dem Stand der Technik zu beobachtende "Blubbereffekt" vermieden.

Das Einsaugen der Luft kann entweder geschehen, nachdem die zu trinkende Flüssigkeit mit dem flüssigen Aromamedium vermischt worden ist, oder davor.

Mit Vorteil kann dabei die angesaugte Luft mit der zu trinkenden Flüssigkeit intensiv vermischt werden. Dies kann z.B. geschehen über Mischanordnungen, wie sie in der noch unveröffentlichten Patentanmeldung DE 10 2021129 285.9 beschrieben sind, insbesondere konisch ausgeführt sind. Mischkammern, deren Mischungswirkung auf Turbulenzen basiert, die in der zu trinkenden Flüssigkeit entstehen, durch die Ablösung der laminaren Strömung in der konischen Mischkammer. Diese Lösung ist technisch sehr einfach und preiswert realisierbar.

Wird eine intensivere Mischwirkung gewünscht, können wendelfömige Mischeinätze in den Trinkhalm eingebracht werden, wie sie ebenfalls in der vorstehend genannten Patentanmeldung beschrieben sind.

Die Luftblasen, welche sich in der zu trinkenden Flüssigkeit gebildet haben, nehmen während des Mischvorganges im Trinkhalm die Aromen oder Duftstoffe auf, welche als Vormischung in die zu trinkende Flüssigkeit eingesaugt worden sind.

Im Rachenraum separieren sich diese Luftblasen wegen ihrer, im Vergleich zur Flüssigkeit, geringen Dichte, steigen in der Mundhöhle nach oben und kollabieren. Die Aromen und Duftstoffe, welche vorher aus der Flüssigkeit in die Luftblasen aufgenommen worden sind, steigen über den Rachenraum in die Nase auf und erreichen die dort angeordnete Rezeptoren so dass das Geschmackserlebnis intensiviert wird durch retronasales Riechen. Außerdem reißen die ausperlenden Luftblasen noch im Mundraum weiter Aromastoffe aus der Flüssigkeit heraus, was das Geschmackserlebnis weiter intensiviert.

Weitere Vorteile und Merkmale eines erfindungsgemäßen Trinksystems ergeben sich aus der nachstehenden Beschreibung möglicher Ausgestaltungsvarianten anhand der beigefügten Figuren. Dabei zeigen:
- Figur 1: eine schematische Darstellung eines erfindungsgemäßen Trinksystems in einer ersten möglichen Ausgestaltungsform in einer längsgeschnittenen Ansicht;
- Figur 2: in einer vergrößerten Darstellung eine Teilansicht des Trinksystems aus Figur 1 in dem Längsschnitt, jedoch in umgekehrter Blickrichtung;
- Figur 3: eine schematische Darstellung eines erfindungsgemäßen Trinksystems in einer zweiten möglichen Ausgestaltungsform in einer längsgeschnittenen Ansicht; und
- Figur 4: eine schematische Darstellung des Trinksystems aus Figur 3 in einer um 90° gegenüber der Darstellung in Figur 2 gedrehten, längsgeschnittenen Ansicht.

In den Figuren sind mögliche Ausgestaltungsformen eines erfindungsgemäßen Trinksystems in schematischer Darstellung gezeigt. Dabei sind die Figuren nicht zwingend vollständig detailgetreu und maßstabsgerecht. Sie dienen vielmehr der Darstellung der erfindungswesentlichen und weiterer, für die Erfindung vorteilhafter Merkmale und Komponenten und dienen weiterhin zusammen mit der nachstehenden Beschreibung einer weiteren Veranschaulichung des erfindungsgemäßen Prinzips.

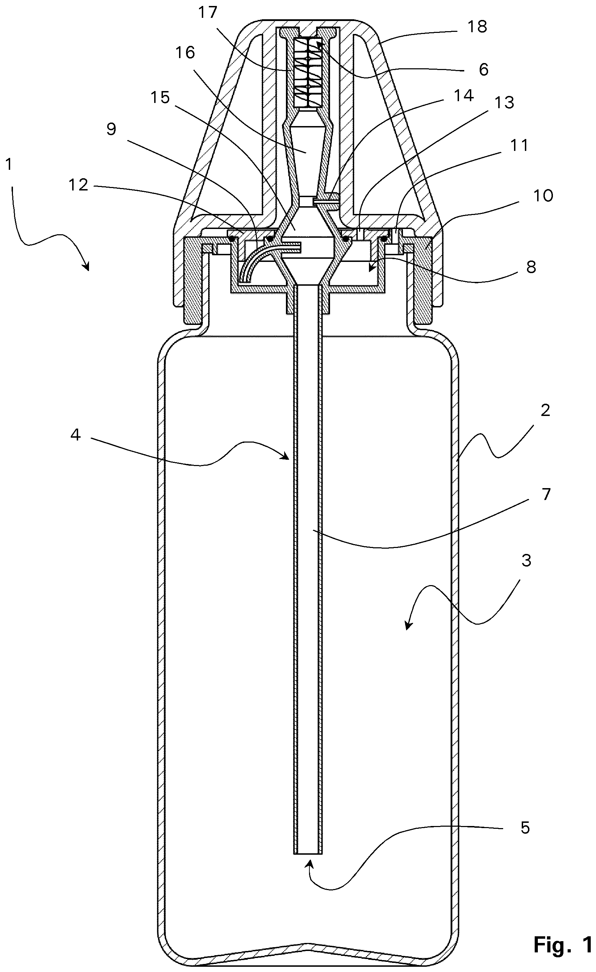

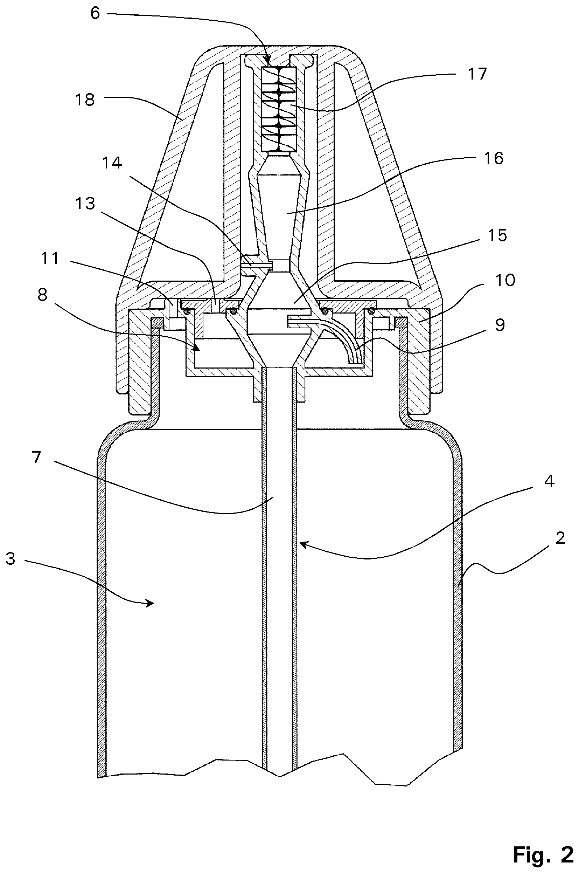

In den Figuren 1 und 2 ist zunächst ein erfindungsgemäßes Trinksystem 1 gemäß einer ersten möglichen Ausgestaltungsform der Erfindung gezeigt. Dieses Trinksystem 1 umfasst ein Trinkgefäß 2, welches hier flaschenartig gebildet ist. Das Trinkgefäß 2 bestimmt einen darin ausgebildeten Aufnahmeraum 3, in dem eine zu konsumierende Flüssigkeit, insbesondere Trinkwasser, eingefüllt werden kann. Weiterer Bestandteil des Trinksystems 1 ist ein Trinkhalm 4, der in den Aufnahmeraum 3 hineinragt. An einem zum Grund des Trinkgefäßes 2 hin gerichteten Ende weist der Trinkhalm 4 eine Einlassöffnung 5 auf. An einem gegenüberliegenden Ende ist eine Trinköffnung 6 vorgesehen. Zwischen der Einlassöffnung 5 und Trinköffnung 6 ist ein Saugkanal 7 gebildet.

Weitere Bestandteil des Trinksystems 1 ist ein Aromareservoir 8, in welchem ein flüssiges, Duft- und/oder Geschmacksstoffe in gelöster oder emulgierter und dabei verdünnter Form enthaltendes Aromamedium eingefüllt werden kann und für den Gebrauch des Trinksystems 1 eingefüllt ist (hier nicht gezeigt). In das Aromareservoir 8 ragt ein Zuströmkanal 9 hinein, hier in Form eines gekrümmten, zu einem Grund des Aromareservoirs 8 hin führenden und dort geöffneten Ansaugrohres. Der Zuströmkanal 9 ist mit dem Trinkhalm 4 verbunden und mündet in dem Saugkanal 7. Das Trinkgefäß 2 ist oberseitig mit einer Abdeckung 10 verschlossen, die von dem Trinkgefäß 2 lösbar ist, um bei abgenommener Abdeckung 10 eine Trinkflüssigkeit in den Aufnahmeraum 3 einfüllen zu können. In der Abdeckung 10 ist eine Öffnung 11 vorgesehen, durch die, wenn durch den Trinkhalm 4 Flüssigkeit aus dem Aufnahmeraum 3 herausgesaugt wird, Luft in den Aufnahmeraum 3 nachströmen kann. Das Aufnahmereservoir 8 enthält einen Wannenabschnitt, der hier in der Abdeckung 10 integral ausgebildet ist und der mit einem Deckel 12 verschließbar ist. Der Deckel 12 ist an dem Wannenabschnitt lösbar festlegbar und kann entfernt werden, um flüssiges Aromamedium in das Aromareservoir 8 einzugeben bzw. nachzufüllen. In dem Deckel 12 ist eine Öffnung 13 gebildet, die ähnlich wie Öffnung 11 einem Nachströmen von Luft, hier in das Innere des Aromareservoirs 8, dient. Die Öffnungen 11 und 13 können mit zum Beispiel über Dichtlippen gebildeten Ventilelementen versehen sein, die ein Nachströmen von Luft bei in dem Aufnahmeraum 3 bzw. in dem Aromareservoir 8 auftretendem Unterdruck ermöglichen, ein Austreten von flüssigem Inhalt aus dem Aufnahmeraum 3 bzw. dem Aromareservoir 8 durch die Öffnungen 11 bzw. 13 hindurch jedoch verhindern.

Weiterhin ist ein Luftkanal 14 zu erkennen, der nach Art einer Stichleitung mit gegenüber dem Saugkanal 7 deutlich verringertem Durchmesser in den Saugkanal 7 hineinführt und über den Luft in den Saugkanal 7 angesaugt werden kann.

Der Zuströmkanal 9 mündet in einem Abschnitt 15 in den Saugkanal 7. In dem Abschnitt 15 ist zunächst durch eine konisch gebildete Erweiterung des Durchmessers des Saugkanals 7 einer Aufweitung gebildet, wobei in dem Bereich des maximalen Durchmessers der Zuströmkanal 9 in den Saugkanal 7 mündet. Anschließend an die Mündung ist eine konische Verjüngung gebildet, in der sich der Saugkanal 7 in dem Abschnitt 15 zu einem geringsten Durchmesser, der einen düsenartigen Durchtritt bildet, verjüngt. Dieser Abschnitt 15 bildet dabei eine Mischkammer aus, in der bei einem Ansaugen von in dem Aufnahmeraum 3 befindlicher Trinkflüssigkeit durch Saugen an der Trinköffnung 6 des Trinkhalms 4 angesaugte Trinkflüssigkeit mit einem durch das hier wirkende Prinzip einer Wasserstrahlpumpe aus dem Aromareservoir 8 angesaugtem flüssigen Aromamedium vermischt wird. In dem Bereich mit dem geringsten Durchmesser, der eine Art Düsenöffnung in dem Saugkanal 7 bildet, mündet der Luftkanal 14, durch den - ebenfalls aufgrund eines durch hier beim Ansaugen vorbeiströmende Trinkflüssigkeit gebildeten - Unterdruck Luft angesaugt wird und in die Flüssigkeit eintritt. In einem Abschnitt 16 ist mit einer axial langgestreckten konischen Aufweitung und einer anschließenden axial kürzer ausgebildeten konischen Verjüngung eine weitere Mischkammer gebildet, in der die angesaugte Luft mit der mit dem zuvor in dem Abschnitt 15 aufgenommenen Aromamedium vermengten Trinkflüssigkeit vermischt wird. Dabei bilden sich sehr feinperlige Luftblasen, in denen das Aromamedium gasförmige Anteile ausbilden kann, bzw. in denen es feine Aerosole bilden kann. In einem weiteren, sich an den Abschnitt 16 anschließenden Abschnitt 17 sind in dem Saugkanal 7 spiralförmigen Leitstrukturen vorgesehen, die noch einmal für ein weiteres inniges Durchmengen der Trinkflüssigkeit mit dem aufgenommenen Aromamedium und der zugeführten Luft bewirkt.

In den Figuren 1 und 2 ist ein auf das Trinksystem 1 aufgesetzter Verschlussdeckel 18 gezeigt, der so gestaltet ist, dass er die Trinköffnung 6 des Trinkhalms 4 verschließt und ebenso die Öffnungen 11 und 13 abdeckt, um so einen Schutz für ein unbeabsichtigtes Auslaufen von Flüssigkeit aus dem Aufnahmeraum 3 und/oder aus dem Aromareservoir 8 zu verhindern. Zum Gebrauch des Trinksystems 1 wird dieser Verschlussdeckel 18 abgenommen und saugt der Nutzer an der Trinköffnung 6 des Trinkhalms 4 um dadurch, wie vorstehend bereits erläutert, in dem Aufnahmeraum 3 befindliche Trinkflüssigkeit, insbesondere Trinkwasser, durch die Einlassöffnung 5 in den Saugkanal 7 des Trinkhalms 4 einzusaugen. Hierbei wird dann in der wie vorstehend bereits beschriebenen Weise in dem Abschnitt 15 die Trinkflüssigkeit mit dem flüssigen Aromamedium vermengt bzw. versetzt und wird diesem Gemisch nachfolgend von außen angesaugte Luft zugeführt, wird dieses Gemisch in dem Abschnitt 16 weiter durchmengt und auch in dem Abschnitt 17 noch einmal durchmischt.

Tritt die so mit dem Aromamedium und der Luft versetzte und inniglich durchmischte Flüssigkeit dann an der Trinköffnung 6 aus dem Trinkhalm 4 aus und gerät in den Mund-Rachen-Raum des Nutzers, so perlt dort die gelöste Luft aus und transportiert gasförmige bzw. in Aerosolform vorliegende Aromabestandteile in Richtung des hinteren Rachenraumes, wo der Nutzer dann ein sogenanntes retronasales Riecherlebnis erfährt. Durch dieses wird dem Nutzer ein Geschmackserlebnis suggeriert, sodass an sich geschmacksneutrales Getränk, welches er aus dem Trinksystem 1 zu sich nimmt, zum Beispiel einfaches Leitungswasser, entsprechend dem gewählten Aromastoff in dem Aromamedium zum Beispiel nach Citrusfrucht, Erdbeere oder Himbeeren zu schmecken scheint. Dieses Geschmackserlebnis kann dann noch einmal verstärkt und dem natürlichen Geschmack weiter nachgebildet werden, wenn das Aromamedium ein flüssigkeitslösliches Süßungsmittel enthält, sodass der Anwender zusammen mit dem retronasalen Riecherlebnis auch ein Geschmacksempfinden auf der Zunge verspürt. Denn die Geschmacksrichtung "süß" kann nicht über das retronasale Riechen wahrgenommen werden. Die entsprechenden Rezeptoren sitzen ausschließlich auf der Zunge.

Durch eine geeignete Auswahl der Durchmesserverhältnisse von Zuströmkanal 9, Saugkanal 7 und den in den Abschnitten 15 und 16 gebildeten Aufweitungen und Verjüngung sowie dem Durchmesser des Luftkanals 14 kann ein bei typischen Gebrauch, d. h. einem typischen beim Ansaugen von dem Anwender aufgebrachten Unterdruck, erreichtes Mischungsverhältnis von zu trinkender Flüssigkeit mit flüssigem Aromamedium und eingebrachter Luft erhalten werden, welches ein in der Intensität optimales Geschmackserlebnis erhalten lässt. Insbesondere wird hierbei nicht zu viel des Aromamediums mitgeführt, aber auch nicht ein zu geringer Anteil, sodass das durch das retronasale Riechen hervorgerufene Geschmackserlebnis auch nicht zu schwach erfahren wird. Das flüssige Aromamedium ist dabei bereits durch einen verdünnt eingesetzten Aromastoff, wie zum Beispiel ein ätherisches Öl, gebildet, um so ein Überdosierung zu verhindern, welches ansonsten zu unangenehmen Folgen führen könnte, zum Beispiel zu einem brennenden und stechenden Empfinden im Mund-Rachen-Raum des Nutzers, der ein zu hoch dosierte Aromamedium zugeführt erhält.

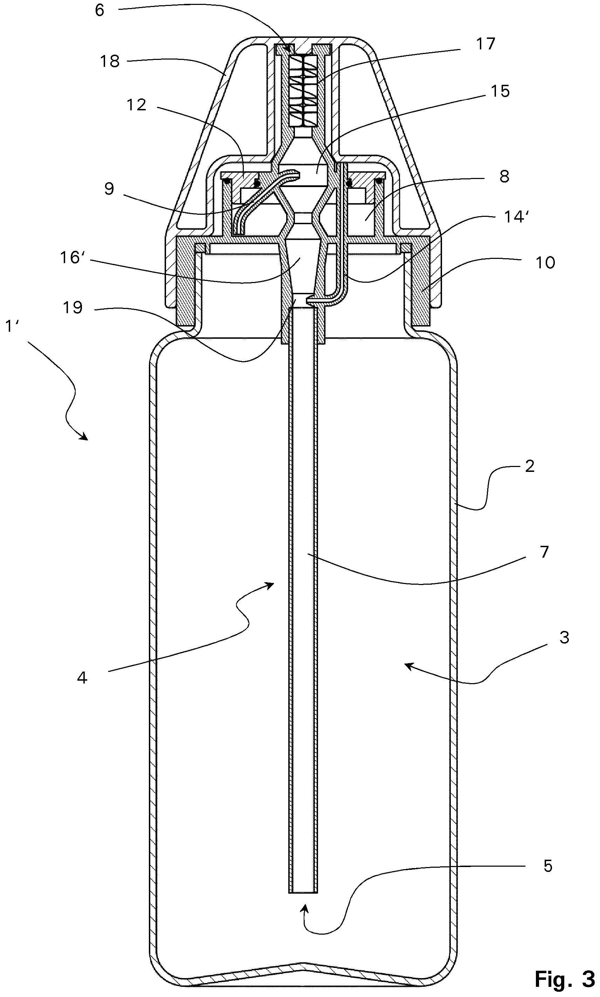

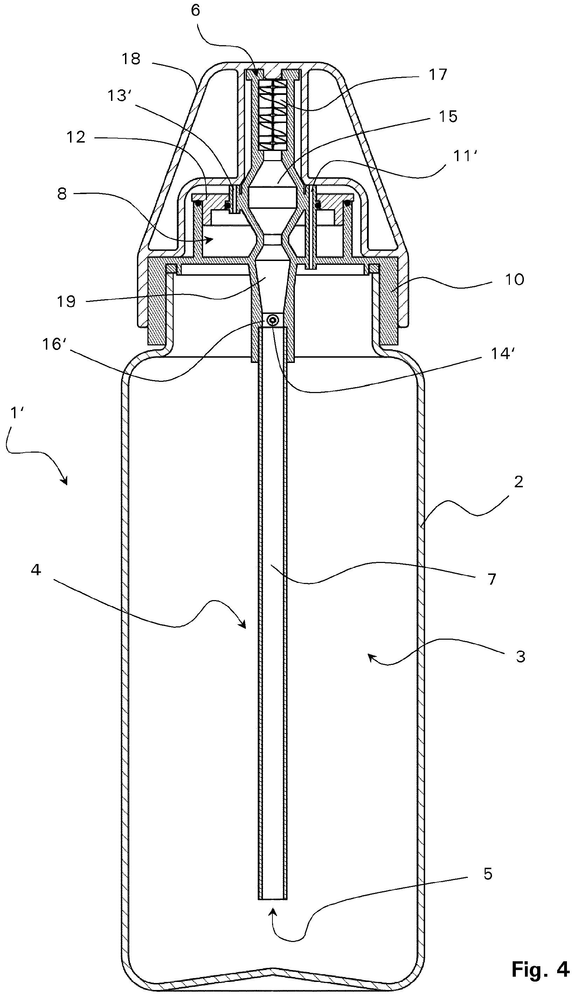

In den Figuren 3 und 4 ist ein zweites mögliches Ausführungsbeispiel eines erfindungsgemäßen Trinksystems 1' dargestellt. Das Trinksystem 1' ist auch in diesem Ausführungsbeispiel in den meisten Bestandteilen und Merkmalen ebenso aufgebaut wie das Trinksystem 1, wie es in den Figuren 1 und 2 gezeigt ist.

Identische oder jedenfalls wirkungsgleiche Elemente sind mit identisch zu den Bezugszeichen in Figuren 1 und 2 gewählten Bezugszeichen bezeichnet. Dabei kann hinsichtlich des Aufbaus und der Funktion der gleich bezeichneten Teile und Elemente zum Zwecke der Vermeidung von Wiederholungen auf die vorstehende Beschreibung des Ausführungsbeispiels gemäß den Figuren 1 und 2 und des Aufbaus und der Funktion der dort gleich bezeichneten Elemente verwiesen werden.

Wesentlicher Unterschied des in den Figuren 3 und 4 gezeigten alternativen Ausführungsbeispiels zu der in den Figuren 1 und 2 gezeigten Variante ist die durch eine andere Anordnung der Mischkammern erreichte, umgekehrte Reihenfolge der Zuführung von Luft und Aromamedium in den durch den Trinkhalm 4, genauer durch den Saugkanal 7, fließenden Strom der zu trinkenden Flüssigkeit. In dem in den Figuren 3 und 4 gezeigten Ausführungsbeispiel ist nämlich zunächst in einem Abschnitt 16' die Zufuhr von Luft durch eine Luftkanal 14' realisiert. Der Luftkanal 14' mündet dabei in einer Verengung 19 des Saugkanals 7, wobei diese Verengung 19 für einen Wasserstrahlpumpeneffekt sorgt, der bei vorbeiströmender Trinkflüssigkeit Luft durch den Luftkanal 14' angesaugt. In diesem Ausführungsbeispiel wird die als erstes Zusatzmedium in die Trinkflüssigkeit angesaugte Luft in einer in dem Abschnitt 16' gebildeten Mischkammer, die analog zu der Mischkammer in dem Abschnitt 16 des Saugkanals 7 in dem in den Figuren 1 und 2 gezeigten Ausführungsbeispiel gebildet ist, mit der Trinkflüssigkeit vermengt. Erst danach gelangt die bereits mit Luft beladene Trinkflüssigkeit in den Abschnitt 15, in dem in der wie vorstehend anhand des in den Figuren 1 und 2 gezeigten Ausführungsbeispiels über den Zuströmkanal 9 aus dem Aromareservoir 8 angesaugtes Aromamedium in die Trinkflüssigkeit aufgenommen wird und dieses Aromamedium in der in dem Abschnitt 16 gebildeten Mischkammer mit der Trinkflüssigkeit durchmengt wird. Anschließend erfolgt in dem mit spiralförmigen Strukturen versehenen Abschnitt 17 des Saugkanals 7 eine finale Durchmischung, ebenso wie in dem vorstehend beschriebenen und in den Figuren 1 und 2 gezeigten Ausführungsbeispiel.

Ein weiterer Unterschied besteht darin, dass anstelle der Öffnungen 11 und 13, wie sie in dem in den Figuren 1 und 2 gezeigten und vorstehend beschriebenen Ausführungsbeispiel zum Nachführen von Luft in den Aufnahmeraum 3, bzw. in das Aromareservoir 8 gebildet sind, hier Nachströmrohre 11' und 13' vorgesehen sind, die demselben Zweck dienen.

Im Übrigen wirkt und funktioniert das in den Figuren 3 und 4 gezeigte Ausführungsbeispiel im Hinblick auf das damit erzeugten Trinkerlebnis ebenso wie das in den Figuren 1 und 2 gezeigte und zuvor beschriebene Ausführungsbeispiel, sodass auch insoweit auf die vorstehende Beschreibung verwiesen werden kann.

Die beiden in den gezeigten Ausführungsvarianten dargestellten möglichen Anordnungen der Zumischung bzw. Beimengungen von Luft und Aromamedium, in der Reihenfolge zunächst Aromamedium, dann Luft (Figuren 1 und 2), bzw. zunächst Luft und dann Aromamedium (Figuren 3 und 4) sind dabei im Wesentlichen technisch ebenbürtig und können bedarfsweise gewählt und vorgesehen werden.

### Bezugszeichenliste

- 1: Trinksystem
- 1': Trinksystem
- 2: Trinkgefäß
- 3: Aufnahmeraum
- 4: Trinkhalm
- 5: Einlassöffnung
- 6: Trinköffnung
- 7: Saugkanal
- 8: Aromareservoir
- 9: Zuströmkanal
- 10: Abdeckung
- 11: Öffnung
- 11': Nachströmrohr
- 12: Deckel
- 13: Öffnung
- 13': Nachströmrohr
- 14: Luftkanal
- 14': Luftkanal
- 15: Abschnitt
- 16: Abschnitt
- 16': Abschnitt
- 17: Abschnitt
- 18: Verschlussdeckel
- 19: Verengung

## Patentansprüche

1. Trinksystem (1, 1') mit
• einem einen Aufnahmeraum (3) für eine Flüssigkeit bestimmenden Trinkgefäß (2),
• einem an dem Trinkgefäß (2) angeordneten, in den Aufnahmeraum (3) hineingeführten, mit einem eine Einlassöffnung (5) aufweisenden ersten Ende in Richtung eines Grundes des Aufnahmeraums (3) ragenden und mit einem eine Trinköffnung (6) aufweisenden zweiten Ende und mit einem zwischen der Einlassöffnung (5) und der Trinköffnung (6) einen Saugkanal (7) aufweisenden, von dem Trinkgefäß (2) vorstehenden Trinkhalm (4),
• einem über einen Zuströmkanal (9) mit dem Trinkhalm (4) verbundenen Aromareservoir (8),
wobei dass in dem Aromareservoir (8) ein flüssiges, Duft- und/oder Geschmacksstoffe in gelöster oder emulgierte und dabei verdünnter Form enthaltendes Aromamedium enthalten ist, welches bei einem Ansaugen von Flüssigkeit aus dem Trinkgefäß (2) durch den Trinkhalm (4) durch den Zuströmkanal (9) in den Trinkhalm (4) angesaugt und dort mit der in den Trinkhalm (4) eingesaugten Flüssigkeit aus dem Trinkgefäß (3) durchmischt wird, wobei
das Aromareservoir (8) einen an dem Trinkgefäß (2) angeordneten oder dort anordbaren Behälter umfasst, in dem das flüssige Aromamedium angeordnet ist, und **dadurch gekennzeichnet, dass**
der Behälter bezogen auf seine Grundfläche eine geringe Höhe aufweist, nämlich ein Verhältnis von Höhe in mm zu Grundfläche in mm² von 1:50 oder weniger, vorzugsweise von etwa 1:60.

2. Trinksystem (1, 1') nach Anspruch 1, **dadurch gekennzeichnet, dass** das flüssige Aromamedium Duft- oder Geschmacksstoffen in Wasser verdünnt in einem Verhältnis von 1:15 bis 1:1.000 aufweist.

3. Trinksystem (1, 1') nach einem der vorhergehenden Ansprüche, **dadurch gekennzeichnet, dass** in dem flüssigen Aromamedium wenigstens ein Süßstoff gelöst enthalten ist.

4. Trinksystem (1, 1') nach Anspruch 3, **dadurch gekennzeichnet, dass** in dem flüssigen Aromamedium wenigstens ein aus der Gruppe Stevia, Aspartam sowie Acesulfam gewählter Süßstoff gelöst enthalten ist.

5. Trinksystem (1, 1') nach einem der vorhergehenden Ansprüche, **dadurch gekennzeichnet, dass** der Behälter eine Höhe aufweist, die maximal 15% einer Länge des Trinkhalms (4) aufweist, vorzugsweise in etwa 10% der Höhe des Trinkhalms (4) ausmacht.

6. Trinksystem (1, 1') nach einem der vorhergehenden Ansprüche, **dadurch gekennzeichnet, dass** der Behälter eine Zuluft-Öffnung (13, 13') aufweist.

7. Trinksystem (1, 1') nach Anspruch 6, **dadurch gekennzeichnet, dass** die Zuluftöffnung (13, 13') einen Durchmesser von 1,5 mm oder weniger, vorzugsweise von 1 mm oder weniger aufweist.

8. Trinksystem (1, 1') nach einem der Ansprüche 6 oder 7, **dadurch gekennzeichnet, dass** die Zuluftöffnung (13, 13') bei Nicht-Gebrauch des Trinksystems (1, 1') durch einen Deckel (12) verschließbar ist.

9. Trinksystem (1, 1') nach einem der vorhergehenden Ansprüche, **dadurch gekennzeichnet, dass** der Behälter mit einem lösbar anbringbaren Deckel verschlossen ist.

10. Trinksystem (1, 1') nach einem der vorhergehenden Ansprüche, **dadurch gekennzeichnet, dass** der Zuströmkanal (9) einen von oben her in das flüssige Aromamedium eintauchenden, eine Einströmöffnung aufweisenden Rohrabschnitt aufweist.

11. Trinksystem (1, 1') nach einem der vorhergehenden Ansprüche, **dadurch gekennzeichnet, dass** der Zuströmkanal (9) einen Innendurchmesser von maximal 1,5 mm aufweist, insbesondere von etwa 1 mm.

12. Trinksystem (1, 1') nach einem der vorhergehenden Ansprüche, **gekennzeichnet durch** eine mit dem Trinkhalm (4) verbundene Ansaugleitung (14, 14') zum Ansaugen von Umgebungsluft in den mit dem Trinkhalm (4) angesaugten Flüssigkeitsstrom.

13. Trinksystem (1, 1') nach Anspruch 12, **dadurch gekennzeichnet, dass** die Ansaugleitung (14, 14') derart gebildet und im Verhältnis zu den weiteren strömungstechnischen Elementen des Trinksystems (1, 1') dimensioniert ist, dass sich beim Ansaugen ein Volumenstrom von angesaugter Luft einstellt, der zwischen 5 und 10 % des zu trinkenden Flüssigkeitsvolumens beträgt.

## Claims

1. A drinking system (1, 1') with a drinking vessel (2) defining a receiving space (3) for a liquid,
• a drinking vessel (2), arranged and inserted into the receiving space (3),
• with a first end having an inlet opening (5) projecting towards the bottom of the receiving space (3) and with a second end having a drinking opening (6) and with a drinking straw (4) projecting from the drinking vessel (2) having an aspiration channel (7) between the inlet opening (5) and the drinking opening (6),
• an aroma reservoir (8), connected to the drinking straw (4) via an inflow channel (9), wherein the aroma reservoir (8) contains a liquid aroma medium containing fragrance and/or flavoring substances in dissolved or emulsified form and thereby in diluted form, which, when liquid is aspirated from the drinking vessel (2) through the drinking straw (4), is aspirated into the drinking straw (4) through the inflow channel (9) and is mixed there with the liquid, aspirated into the drinking straw (4) from the drinking vessel, wherein the aroma reservoir (8) comprises a container, arranged on or that can be arranged on the drinking vessel (2), in which the liquid aroma medium is arranged, and **characterized in that** the container has a low height relative to its base area, namely a ratio of height in mm to base area in mm² of 1:50 or less, preferably of about 1:60.

2. The drinking system (1, 1') according to claim 1, **characterized in that** the liquid aroma medium has fragrance or flavoring substances, diluted in water in a ratio of 1:15 to 1:1,000.

3. The drinking system (1, 1') according to any one of the preceding claims, **characterized in that** at least one sweetener is dissolved in the liquid aroma medium.

4. The drinking system (1, 1') according to claim 3, **characterized in that** at least one sweetener, selected from the group consisting of stevia, aspartame and acesulfame, is dissolved in the liquid aroma medium.

5. The drinking system (1, 1') according to any one of the preceding claims, **characterized in that** the container has a height which is at most 15% of the length of the drinking straw (4), preferably approximately 10% of the height of the drinking straw (4).

6. The drinking system (1, 1') according to any one of the preceding claims, **characterized in that** the container has an air inlet opening (13, 13').

7. The drinking system (1, 1') according to claim 6, **characterized in that** the air inlet opening (13, 13') has a diameter of 1.5 mm or less, preferably 1 mm or less.

8. The drinking system (1, 1') according to any one of claims 6 or 7, **characterized in that** the air inlet opening (13, 13') can be closed by a lid (12) when the drinking system (1, 1') is not in use.

9. The drinking system (1, 1') according to any one of the preceding claims, **characterized in that** the container is closed with a detachably attachable lid.

10. The drinking system (1, 1') according to any one of the preceding claims, **characterized in that** the inflow channel (9) has a pipe section having an inflow opening which dips from above into the liquid aroma medium.

11. The drinking system (1, 1') according to any one of the preceding claims, **characterized in that** the inflow channel (9) has an inner diameter of at most 1.5 mm, in particular of about 1 mm.

12. The drinking system (1, 1') according to any one of the preceding claims, **characterized by** an aspiration line (14, 14'), connected to the drinking straw (4), for aspirating ambient air into the liquid stream aspirated with the drinking straw (4).

13. The drinking system (1, 1') according to claim 12, **characterized in that** the aspiration line (14, 14') is formed and dimensioned in relation to the other flow-related elements of the drinking system (1, 1') such that, during aspiration, a volume flow of aspirated air is established which is between 5 and 10% of the liquid volume to be drunk.

## Revendications

1. Système de boisson (1, 1') avec
- un récipient de boisson (2) définissant un espace de réception (3) pour un liquide,
- une paille (4) située sur le récipient de boisson (2), introduite dans l'espace de réception (3), avec une première extrémité présentant une ouverture d'admission (5) se dressant vers un fond de l'espace de réception (3), et une deuxième extrémité présentant une ouverture pour boisson (6), présentant un canal d'aspiration (7) entre l'ouverture d'admission (5) et l'ouverture pour boisson (6), et faisant saillie sur le récipient de boisson (2),
- un réservoir d'arôme (8) relié à la paille (4) par un canal d'arrivée (9),
dans lequel le réservoir d'arôme (8) contient un milieu aromatique liquide, contenant des substances odorantes et/ou gustatives sous forme dissoute ou émulsifiée et ainsi diluées, qui, lors d'une aspiration de liquide du récipient de boisson (2), est aspiré par la paille (4) à travers le canal d'arrivée (9) dans la paille (4) et qui y est mélangé avec le liquide provenant du récipient de boisson (3) aspiré dans la paille (4), dans lequel
le réservoir d'arôme (8) comprend un réservoir situé sur le récipient de boisson (2) ou pouvant y être situé, dans lequel le milieu aromatique liquide est situé, et se **caractérise en ce que**
le réservoir présente une faible hauteur par rapport à sa surface de base, à savoir un rapport hauteur en mm/surface de base en mm² de 1:50 ou moins, de préférence d'environ 1:60.

2. Système de boisson (1, 1') selon la revendication 1, **caractérisé en ce que** le milieu aromatique liquide présente des substances odorantes ou gustatives diluées dans de l'eau dans un rapport de 1:15 à 1:1000.

3. Système de boisson (1, 1') selon l'une quelconque des revendications précédentes, **caractérisé en ce qu'**au moins un édulcorant dissous est contenu dans le milieu aromatique liquide.

4. Système de boisson (1, 1') selon la revendication 3, **caractérisé en ce qu'**au moins un édulcorant choisi parmi le groupe comprenant la stévia, l'aspartame ainsi que l'acésulfame est contenu dissous dans le milieu aromatique liquide.

5. Système de boisson (1, 1') selon l'une quelconque des revendications précédentes, **caractérisé en ce que** le réservoir présente une hauteur qui ne dépasse pas 15 % de la longueur de la paille (4), constituant de préférence environ 10 % de la hauteur de la paille (4).

6. Système de boisson (1, 1') selon l'une quelconque des revendications précédentes, **caractérisé en ce que** le réservoir présente une ouverture d'arrivée d'air (13, 13').

7. Système de boisson (1, 1') selon la revendication 6, **caractérisé en ce que** l'ouverture d'arrivée d'air (13, 13') présente un diamètre de 1,5 mm ou moins, de préférence de 1 mm ou moins.

8. Système de boisson (1, 1') selon l'une des revendications 6 ou 7, **caractérisé en ce que** l'ouverture d'arrivée d'air (13, 13') peut être fermée par un couvercle (12) lorsque le système de boisson (1, 1') n'est pas utilisé.

9. Système de boisson (1, 1') selon l'une quelconque des revendications précédentes, **caractérisé en ce que** le réservoir est fermé par un couvercle amovible.

10. Système de boisson (1, 1') selon l'une quelconque des revendications précédentes, **caractérisé en ce que** le canal d'arrivée (9) présente une section de tube plongeant par le haut dans le milieu aromatique liquide, présentant une ouverture d'arrivée.

11. Système de boisson (1, 1') selon l'une quelconque des revendications précédentes, **caractérisé en ce que** le canal d'arrivée (9) présente un diamètre intérieur maximal de 1,5 mm, en particulier d'environ 1 mm.

12. Système de boisson (1, 1') selon l'une quelconque des revendications précédentes, **caractérisé par** une conduite d'aspiration (14, 14') reliée à la paille (4) pour aspirer de l'air ambiant dans le flux de liquide aspiré par la paille (4).

13. Système de boisson (1, 1') selon la revendication 12, **caractérisé en ce que** la conduite d'aspiration (14, 14') est formée et dimensionnée de telle sorte par rapport aux autres éléments de la technique d'écoulement du système de boisson (1, 1') qu'un débit volumique d'air aspiré se mette en place lors de l'aspiration, représentant entre 5 et 10 % du volume de liquide à boire.
